# EUROPEAN PATENT APPLICATION

(11) **EP 0 936 188 A1**
(43) Date of publication of application: **18.08.1999**
(21) Application number: 99300377.1
(22) Date of filing: 20.01.1999
(51) Int. Cl.: C02F 1/461, C02F 1/30

(54) **Process for reducing viscosity of water through electrolysis**

(30) Priority: 20.01.1998 US 9775
(71) Applicant: Kim, Hee Jung, Seoul 138-220 (KR); Shin, Myoung Soo, Seoul 136-020 (KR)
(72) Inventor: Kim, Hee Jung, Songpa-ku, Seoul 138-220 (KR); Shin, Myoung Soo, Sungbuk-ku, Seoul 136-020 (KR); Park, Sang Chul, Seocho-ku, Seoul 137-044 (KR)
(74) Representative: Maguire, Peter Albert

(57) **Abstract**

A multi-step process that yields water with a reduced viscosity. The process comprises a plurality of separate batch processes, wherein each successive process yields a product with a lower viscosity than the product yielded from the previous process. The first process comprises the passage of an electric current through water without the presence of electrolytes, which yields water with a lowered viscosity. The resulting water is then placed into a series of batch energizer reactors, wherein the water is successively irradiated with far infrared light in each batch reactor for a specified resident time period, each successive reactor yielding a product with a lower viscosity. Receivers at each batch reactor allow the water to be properly drained from the reactors.

Applications for water with lowered viscosity are numerous and in virtually all applications where water is used, water with lowered viscosity can be substituted to yield superior results.

## Description

### BACKGROUND OF THE INVENTION

### 1. Field of the invention

The present invention pertains to chemical processes used to alter the properties of chemical compounds, and specifically to processes that lower the viscosity of water through electrolysis.

### 2. Description of the Prior Art

Due to the non-linear, angled structure of water (H2O), water is a polar molecule. In typical liquid form, clusters of water molecules form as hydrogen bonding occurs between the water molecules due to their polarity. These clusters inhibit the flow of water and thus increase the viscosity of water. The clusters of water molecules may be dissociated in order to reduce the viscosity of water by decreasing the net size of the clusters of water molecules.

The prior art pertaining to the lowering of viscosity of water does not teach any method in lowering the viscosity of water. Hence, this process is novel and unanticipated.

Consequently, the primary object of the present invention is to provide a process that lowers the viscosity of water.

A further object of the present invention is to provide a process that lowers the viscosity of water that does not require significantly expensive equipment.

### SUMMARY OF THE INVENTION

The present invention comprises a multi-step process that yields water with a lowered viscosity. The process comprises a plurality of separate batch processes, wherein each successive process yields a product with a lower viscosity than the product yielded from the previous process. The first process comprises the passage of an electric current through water without the presence of electrolytes, which yields water with a lowered viscosity. This is achieved by reducing the size of water molecule clusters formed due to hydrogen bonding. The reduction of size of the clusters is achieved through electrolysis of the water. The electrolysis of the water permanently breaks the hydrogen bonds between the water molecules and thus dissociates the clusters of water molecules, thereby reducing the viscosity of water. The resulting water is then placed into a series of batch energizer reactors, wherein the water is successively irradiated with far infrared light in each batch reactor for a specified resident time period, each successive reactor yielding a product with a lower viscosity. Far infrared light also provides the energy necessary to break the hydrogen bonding forces that hold the water molecule clusters together. Receivers at each batch reactor allow the water to be properly drained from the reactors.

Applications for water with lowered viscosity are numerous and in virtually all applications where water is used, Water with lowered viscosity can be substituted to yield superior results.

These together with other objects of the invention are explained clearly in the claims annexed to and forming a part of this disclosure. For a better understanding of the invention, its operating advantages and the specific objects attained by its use, reference Should be made to the accompanying drawings and descriptive matter in which there are illustrated preferred embodiments of the invention.

### BRIEF DESCRIPTION OF THE DRAWINGS

For a better understanding of the principle and nature of the present invention, reference should be made to the following detailed description taken in connection with the accompanying drawings in which:

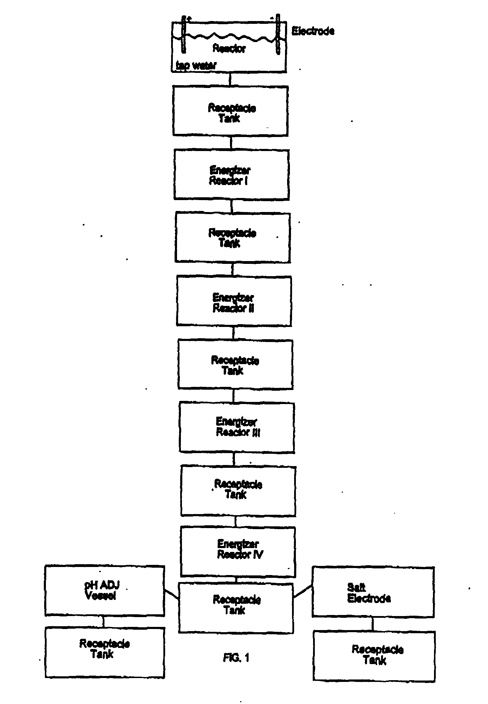

**FIG. 1** is block flow diagram of the process for reducing the viscosity of water.

### DETAILED DESCRIPTION OF THE PREFERRED EMBODIMENT

Referring to **FIG. 1**, the present invention is a multi-step process that comprises a plurality of batch processes, wherein the product yielded from a step in the overall process is then successively used as the feed for the subsequent batch process.

The first batch process involves the passage of an electrical current through water. The water used is preferably filtered and is without electrolytes or contaminants, so as to maximize the oxygen content within the water, as water with dissolved contaminants like salt is unable to be fully saturated with oxygen. The voltage of the current is preferably between 50 and 100 volts. The process may use multiple cathodic and anodic leads, so as to maximize the effects of the current. In addition, stirrers may be employed in the reaction as well in order to ensure exposure to the entire solution. This step yields a product with a lower viscosity by dissociating the water molecule clusters which inhibit fluid motion and thus cause the viscosity of a solution to increase.

The second batch process comprises an energizing reactor that comprises a batch process tank reactor with several far infrared light emitters. These emitters are positioned along the tank so as to maximize exposure to the water. The effluent yielded from the first batch process is then fed into the energizer reactor where the water is irradiated with far infrared light by the emitters. This irradiation by far infrared light also has the net effect of reducing the viscosity of the exposed water by providing the energy to break the hydrogen bonding occuring between the clustered water molecules, thereby decreasing the viscosity of the water by reducing the size of the inhibiting clusters.

A plurality of these energizer reactors are placed in series, wherein the effluent from one energizer reactor serves as the feed for the subsequent energizer reactor down the process chain. The amount of change in the viscosity of water is proportional to the resident time of exposure to the far infrared light. Additional energizing reactors may be placed in the process chain, but considerable efficiency is lost with each subsequent reactor.

Effluent from the fourth energizer reactor may be fed to a pH adjusting vessel wherein the solution is introduced to basic or acidic compounds in order to reduce adjust the pH of the solution. Effluent from the fourth energizer reactor may also be fed into a reactor with an active salt electrode.

## Claims

1. A process for reducing the viscosity of water comprising:
a) filtration of water;
b) electrolysis of said water using a cathode and anode, and a current of voltage ranging between 50 to 100 volts;
c) irradiation of said water by far infrared light.

2. A process for reducing the viscosity of water as mentioned in claim 1, wherein said water is irradiated by far infrared light of varying wavelengths.

3. A process for reducing the viscosity of water as mentioned in claim 1, wherein pH of said water is adjusted.

4. A process for reducing the viscosity of water as mentioned in claim 1, wherein said water is introduced into a salt electrode.

5. A process for reducing the viscosity of water as mentioned in claim 1, wherein said water is introduced into a salt electrode insoluble in water.
